# EUROPÄISCHE PATENTSCHRIFT

(11) **EP 1 639 255 B1**
(45) Veröffentlichungstag und Bekanntmachung des Hinweises auf die Patenterteilung: **28.03.2012**
(21) Anmeldenummer: 04740485.0
(22) Anmeldetag: 30.06.2004
(51) Int. Cl.: F02M 45/10, F02D 43/00, F02D 41/40

(54) **VERFAHREN ZUM BETRIEB EINES DIREKTEINSPRITZENDEN VERBRENNUNGSMOTORS SOWIE DIREKTEINSPRITZENDER VERBRENNUNGSMOTOR**
METHOD FOR OPERATING A DIRECT-INJECTION INTERNAL COMBUSTION ENGINE AND DIRECT-INJECTION INTERNAL COMBUSTION ENGINE
PROCEDE DE FONCTIONNEMENT D'UN MOTEUR A COMBUSTION INTERNE A INJECTION DIRECTE ET MOTEUR A COMBUSTION A INJECTION DIRECTE

(30) Priorität: 01.07.2003 DE 10330540
(43) Veröffentlichungstag der Anmeldung: 29.03.2006
(73) Patentinhaber: Volkswagen Aktiengesellschaft, 38436 Wolfsburg (DE)
(72) Erfinder: STIEBELS, Bernd, 38528 Adenbüttel (DE); EBUS, Feitse, 38446 Wolfsburg (DE); SCHWEIZER, Marc, 38106 Braunschweig (DE); FLADUNG, Oliver, 38118 Braunschweig (DE)
(74) Vertreter: Pohlmann, Bernd Michael
(86) Internationale Anmeldenummer: PCT/EP2004/007107
(87) Internationale Veröffentlichungsnummer: WO 2005/003549

(56) Entgegenhaltungen:
- EP-A- 1 035 321
- WO-A-01/65105
- WO-A-98/14703
- DE-A- 10 042 551
- DE-A- 19 548 526
- GB-A- 2 315 814
- US-A- 5 941 207

## Beschreibung

Die Erfindung betrifft ein Verfahren zum Betrieb eines direkteinspritzenden fremdgezündeten Verbrennungsmotors sowie einen direkteinspritzenden fremdgezündeten Verbrennungsmotor nach den Oberbegriffen der jeweiligen unabhängigen Patentansprüche.

Die Direkteinspritzung bei einem fremdgezündeten Verbrennungsmotor (Otto-Motor) ist eine geeignete Maßnahme, neben dem Kraftstoffverbrauch auch das Drehmoment und die Leistung des Motors zu steigern. Die Möglichkeit einer Steigerung des Drehmoments resultiert aus den Besonderheiten der Direkteinspritzung.

Bei der Direkteinspritzung wird der Kraftstoff nahezu vollständig im Brennraum verdampft. Die dazu erforderliche Verdampfungswärme wird der angesaugten Luft entzogen, so dass eine Innenkühlung der angesaugten Luft, insbesondere während des Einströmvorgangs in den Brennraum, erreicht wird. Die mit der Abkühlung einhergehende Abnahme der Dichte der Luft führt dazu, dass mehr Luft in den Motor einströmen kann. Damit ergibt sich eine Luftaufwandsteigerung gegenüber einer Saugrohreinspritzung, die in ein höheres Drehmoment umgewandelt werden kann. Bei der Saugrohreinspritzung wird flüssiger und ein großer Anteil vorverdampfter Kraftstoff synchron mit der Luft über das Einlassventil in den Brennraum angesaugt. Im Vergleich zur Direkteinspritzung kann weniger Frischluft in den Zylinder angesaugt werden, da der vorverdampfte Kraftstoff ein circa 300 mal höheres Volumen benötigt wie der flüssige Kraftstoff.

Ferner ist durch die Verdampfungskühlung der angesaugten Luft die Gemischtemperatur am Ende der Verdichtung niedriger als bei der Saugrohreinspritzung. Dies resultiert in einer reduzierten Klopfneigung des Motors, so dass wirkungsgradgünstigere Zündwinkel eingestellt werden können, die wiederum zu einer Steigerung des Drehmoments führen können. Als Folge der reduzierten Klopfneigung kann ein höheres Verdichtungsverhältnis eingestellt werden, das über einen erhöhten Wirkungsgrad ebenfalls zu einer Drehmomentsteigerung beitragen kann.

Während bei der Saugrohreinspritzung im Bereich der Volllast aufgrund der niedrigen Einspritzdrücke drehzahlabhängig ein Zeitfenster von > 360°kW für die Einspritzung benötigt wird, können bei einem direkteinspritzenden Otto-Motor bei den heute üblichen Einspritzdrücken von bis zu 11 MPa zum Beispiel bei 2.000 1/min Einspritzdauern um deutlich unter 40°kW erzielt werden. Ein derartiges Einspritzfenster kann zur Optimierung des Motorbetriebs in weiten Bereichen innerhalb des Ansaughubes verschoben werden.

Für die Einspritzung beim direkteinspritzenden Otto-Motor sind folgende Betriebsstrategien üblich:
- Bei Teillast ein Betrieb mit geschichteter Zylinderladung und Abgasrückführung;
- im Leerlauf und bei sehr niedriger Last üblicherweise ein Betrieb mit geschichteter Zylinderladung und Abgasrückführung bei Teilandrosselung;
- bei höheren Lasten homogener Betrieb, insbesondere zur Vermeidung von Zonen im Brennraum mit überfettetem Gemisch;
- in-einem Übergangsbereich homogener/magerer Betrieb zwischen Schichtladebetrieb und Homogen-Lambda = 1-Betrieb.

Im Betrieb von direkteinspritzenden Verbrennungsmotoren nehmen zu frühem Einspritzbeginn hin Kohlenwasserstoff- (HC) und Rußemissionen aufgrund der dann vorherrschenden Kolbenbenetzung deutlich zu. Bei einer Verschiebung zu späten Einspritzpunkten hin wird ein Emissionsoptimum bezüglich HC, Ruß und Restsauerstoff durchlaufen. Bei noch späteren Einspritzpunkten steigen die HC- und Sauerstoffemissionen aufgrund von Schichtungseffekten und der abnehmenden Verdampfungszeit deutlich an. Die Klopfneigung nimmt zwar zu spätem Einspritzbeginn hin kontinuierlich ab, da die Verdichtungstemperatur immer mehr sinkt, je später die Einspritzung und damit auch die Verdampfung des Kraftstoffs erfolgt. Die erwähnten Nachteile eines späten Einspritzbeginns begrenzen aber bisher den erreichbaren Drehmoment- und Abgasemissionsvorteil der Direkteinspritzung beim Otto-Motor.

In dem Dokument DE 100 14 553 A1 wird das bei später Kraftstoffeinspritzung, insbesondere bei fremdgezündeten Brennkraftmaschinen, auftretende Problem von Schwarzrauchemissionen angesprochen, die unter anderem auf fette Gemischzonen in der kompakten Gemischwolke zurückzuführen sind. Derartige fette Gemischzonen mit unerwünscht hoher Kraftstoffkonzentration entstehen aufgrund der geringen Eindringtiefe des eingespritzten Kraftstoffs in den Brennraum gegenüber hohem Zylinderdruck. Eine Anhebung des Einspritzdrucks könne keine Abhilfe schaffen. Darüber hinaus werde im Volllastbetrieb unter annähernd homogener Gemischbildung keine gleichmäßige Kraftstoffverteilung im Brennraum erreicht, was zu hohen Schadstoffemissionen, insbesondere Kohlenwasserstoffe und Kohlenmonoxyd, und zu niedriger Motorleistung führe. Zur Reduzierung der Abgasemission der Brennkraftmaschine wird in dem erwähnten Dokument vorgeschlagen, den Injektor während eines Einspritzvorganges in einer vorgegebenen Taktfolge vielfach zu öffnen und zu schließen.

Aus der US - A - 5 941 207 ist ein Verfahren zum Betrieb eines direkteinspritzenden fremdgezündeten Verbrennungsmotors mit einer Einrichtung zur Kraftstoffeinspritzung mittels eines Injektors in den Brennraum zumindest eines mit einem Einlassventil versehenden Zylinders des Motors, bekannt, wobei die Kraftstoffeinspritzung mit einer Zerstäubungsgüte von 12 µm SMD-Tröpfchengröße oder besser erfolgt. Bei einer Last des Motors von mehr als 50% seiner Maximallast erfolgt eine Umschaltung von einem Schichtbetrieb auf einen Homogenbetrieb.

Aus der EP 1 035 321 A2 ist ein fremgezündeter Verbrennungsmotor bekannt mit einem Injektor, der eine Injektionsöffnung aufweist mit einer dieser gegenüberliegend angeordneten Aufpralloberfläche. Bei einer hohen Last kann der bekannte Verbrennungsmotor mit einer angenähert homogenen Ladung betrieben werden, wobei der Einspritzbeginn bei ungefähr 100 Grad Kurbelwelle nach dem oberen Totpunkt im Ansaugtakt gelegt wird, womit eine Mager-Mischung in der Nähe des Bodens der Verbrennungskammer erreicht werden soll. Hiermit sollen die Kohlenwasserstoffbeladung des Zylinderkolbens reduziert und damit das Emissionensverhalten verbessert werden. Der Injektor hat eine Zerstäubungsgüte zwischen 15 µm und 27 µm, bevor der Kraftstoff von der Platte abgelenkt wurde. Nach Ablenkung wird eine Tröpfchengröße zwischen 6 µm und 12 µm erreicht.

Aus der DE 100 42 551 ist bereits ein Verfahren zur Steuerung einer Kraftstoff-Direkteinspritzung bekannt bei der der Einspritzzeitpunkt temperaturabhängig gesteuert wird. Unterhalb einer Temperaturschwelle wird der Einspritzzeitpunkt verzögert, insbesondere erfolgt die Einspritzung bei einem Kurbelwellenwinkel von 70 Grad bis 130 Grad nach dem oberen ToTpunkt-OT. Durch den späten Einspritzzeitpunkt wird aufgrund der größeren Distanz zum dem Einspritzventil und dem Kolbenboden erreicht, daß der eingespritze Kraftstoff nahezu vollständig verdampft und nicht den Kolbenboden benetzt. Damit wird eine Verringerung der zuzumessenden Kraftstoffmenge und gleichzeitig eine Verringerung von Kohlenwasserstoff-Emissionen erreicht. Zur Gewährleistung einer humogenen Gemischaufbereitung ist ferner eine Erhöhung des Einspritzdrucks vorzugsweise um einen Faktor 1,3 bis 1,7 gegenüber dem gleichen betriebswarmen Motorbetriebspunkt vorgesehen.

Aufgabe der vorliegenden Erfindung ist es, bei einem direkteinspritzenden fremdgezündeten Verbrennungsmotor Nachteile im Verbrennungsablauf bei später Einspritzung zu eliminieren und eine Verbesserung des Drehmoment- und Emissionsverhaltens zu erreichen.

Diese Aufgabe wird erfindungsgemäß durch die Merkmale der unabhängigen Patentansprüche gelöst.

Es wird erfindungsgemäß vorgeschlagen, bei einem gattungsgemäßen Verfahren für einen gegebenen Betriebspunkt des Motors den Einspritzbeginn in einem Bereich zu positionieren, in dem der Liefergrad des Motors mindestens 70 % seines Maximalwertes λ_{I}^{max} aufweist, wobei eine Zerstäubungsgüte von 12 µm SMD Tröpfchengröße und besser verwendet wird.

Bevorzugt ist eine Positionierung des Einspritzbeginns in einem Intervall I zwischen 220°kW und 300°kW vor dem oberen Totpunkt (ZOT) und/oder in einem Bereich von mindestens 80 % eines maximalen Einlassventilhubs vorgesehen.

Die Erfindung geht von der Erkenntnis aus, dass das Liefergradverhalten eines direkteinspritzenden fremdgezündeten Verbrennungsmotors stark vom Zeitpunkt der Einspritzung während der Ansaugphase abhängt. Der Liefergrad nimmt - relativ zum Saugrohreinspritzer - mit später Einspritzung zunächst zu, erreicht ein Maximum und sinkt zu späten Einspritzzeitpunkten wieder ab. Nach dem Stand der Technik wird der Einspritzbeginn zu einem früheren Zeitpunkt gewählt, da bei zu später Einspritzung die weniger effektive Verbrennung trotz des höheren Liefergrades zu einer Drehmoment- und Leistungsminderung führt.

Erfindungsgemäß erfolgt der Einspritzbeginn in einem Bereich, in dem der Liefergrad des Motors mindestens 70 % seines Maximalwertes λ_{I}^{max} aufweist und gleichzeitig die Kraftstoffeinspritzung mit einer Zerstäubungsgüte von 12 µm SMD Tröpfchengröße oder besser erfolgt. Durch eine derartige Wahl der Zerstäubungsgüte wird in überraschender Weise der Verbrennungsablauf der Direkteinspritzung optimiert, so dass die erwähnten Nachteile eines späten Einspritzbeginns beseitigt werden können.

Bei einer bevorzugten Ausführungsform der Erfindung ist eine Einspritzzeit mit einer Dauer in einem Bereich von zumindest 35°kW und maximal 55°KW vorgesehen. Damit wird ein ausreichender Austausch des Kraftstoffs mit der Luft ermöglicht und das Abkühlungsverhalten der Luft verbessert.

Vorzugsweise wird ein Injektor mit Einspritzdrücken von 12 MPa, bevorzugt 15 MPa, eingesetzt. Über die Wahl des Einspritzdrucks kann auf einfache Weise auf die Tröpfchengröße SMD Einfluss genommen und damit die erforderliche Zerstäubungsgüte erreicht werden.

Bevorzugt ist ein Injektor mit einem statischen Durchfluss von maximal 0,2 ccm/s pro kW, insbesondere maximal 0,12 ccm/s pro kW Motorleistung, da hiermit die Einspritzzeit auch bei hohen Einspritzdrücken genügend verlängert werden kann, um einen merklichen Liefergradvorteil des direkteinspritzenden Motors gegenüber einem mit Saugrohr-Einspritzung zu erreichen.

Ferner ist bevorzugt zumindest einer der Parameter Einflussbeginn, Einspritzzeit, Zerstäubungsgüte oder Einspritzdruck derart gewählt, dass bei einem Lambda-Wert von 0,9 oder mehr eine Sauerstoffemission von < 0,3 %, eine Kohlenwasserstoffemission von ≤ 10g/kWh und Rußemissionen mit einer Bosch-Schwärzungszahl SZ ≤ 0,5 erzielt werden.

Das erfindungsgemäße Verfahren ist besonders bevorzugt in einem Drehzahlbereich von bis 3.000 1/min eingesetzt, kann jedoch auch bei höheren Drehzahlen zu einer Steigerung des Drehmoments führen.

Das erfindungsgemäße Verfahren kann sowohl mit einer konventionellen Einfach- als auch mit einer Doppel- oder Mehrfacheinspritzung betrieben werden. Bei einer Doppel- oder Mehrfacheinspritzung wird nach Einspritzbeginn die einzuspritzende Kraftstoffmenge auf mehr als ein Einspritzereignis aufgeteilt und hiermit eine weitere Verbesserung des Verbrennungsvorganges erreicht.

Der erfindungsgemäße direkteinspritzende fremdgezündete Verbrennungsmotor mit einer Einrichtung zur Einstellung einer Kraftstoffeinspritzung in den Brennraum zumindest eines mit einem Einlassventil versehenen Zylinders weist ein Steuermodul zur Festlegung eines Einspritzbeginns nach dem vorerwähnten Verfahren auf.

Zur Reduzierung des Kraftstoffverbrauchs in einem Teillastbetrieb oder im Leerlauf erlaubt der Motor einen Schichtladebetrieb.

Weitere Vorteile und Aspekte der Erfindung sind unabhängig von ihrer Zusammenfassung in den Patentansprüchen in der nachfolgenden Beschreibung von Ausführungsbeispielen mit Hilfe von Zeichnungen angegeben.

Dabei zeigen:
- Figur 1: in schematischer Darstellung einen Otto-Motor mit Direkteinspritzung
- Figur 2: Abhängigkeiten von motorischen Parametern vom Einspritzbeginn nach dem Stand der Technik
- Figur 3: Liefergrad und Klopfneigung in Abhängigkeit vom Einspritzbeginn sowie eine Festlegung eines Einspritzkorridors gemäß der Erfindung
- Figur 4: den Verlauf der Tröpfchengröße in Abhängigkeit vom Einspritzdruck für einen typischen injektor.

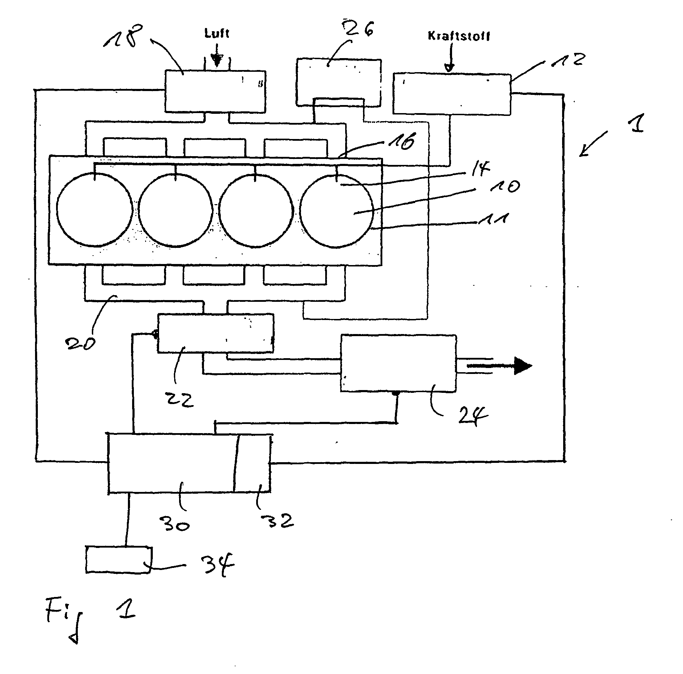

Figur 1 zeigt in einer schematischen Darstellung einen fremdgezündeten, vorzugsweise schichtladefähigen direkteinspritzenden Verbrennungsmotor 1. In einen Brennraum 10 eines Zylinders 11 kann mittels einer Einrichtung zur Kraftstoffeinspritzung 12 Kraftstoff direkt eingespritzt werden. In Fig. 1 ist ein Common Rail-Einspritzsystem dargestellt, jedoch ist die Erfindung auch mit konventionellen Einspritzsystemen ausführbar. Für Einspritzung und Zumessung des Kraftstoffs ist jedem Zylinder 11 ein Injektor 14 sowie zur Steuerung der Luftzufuhr ein Einlassventil 16 zugeordnet. Über ein elektronisches Gaspedal 18 erfolgt eine Bemessung von Verbrennungsluft in die Zylinder 11. Die Erfindung beinhaltet auch Ausführungsformen, bei denen Einzelheiten der Luftzufuhr und Bemessung anders als in Fig. 1 ausgebildet sind.

Dem Verbrennungsmotor 1 ist ferner ein Abgassystem 20 mit einem motornahen Vorkatalysator 22 und einem Hauptkatalysator 24 zugeordnet. Die Erfindung ist darüber hinaus auch für DI-Ottomotoren ohne Vorkatalysator mit motornahem Hauptkatalysator wirksam. Vorzugsweise ist der Vorkatalysator als 3-Wege-Katalysator und der Hauptkatalysator als NOx-Speicherkatalysator (Denox-Katalysator) ausgebildet, um auch im besonders verbrauchsgünstigen Schichtladebetrieb eine sichere Abgasreinigung zu gewährleisten. Über ein Abgasrückführventil 26 kann von der Abgasanlage 20 Abgas zur Beeinflussung des Verbrennungsverhaltens der Verbrennungsluft zugeführt werden.

Zur Steuerung bzw. Regelung der verschiedenen Motorfunktionen ist ferner ein Motorsteuergerät 30 vorgesehen, das Signale von Sensoren 34 für Drehzahl, Motortemperatur, Katalysatortemperatur, einer Drosselklappenstellung sowie einer Last- oder Leistungsanforderung umfasst und über die Einrichtung 12 Kraftstoff entsprechend dosieren kann. Das Steuergerät 30 beinhaltet ein Steuermodul 32, mit dem ein Einspritzbeginn des Kraftstoffs in den Brennraum 10 festgelegt werden kann.

In einer besonders bevorzugten Ausführungsform der Erfindung ist dem Motorsteuergerät 30 ein Drehmomentmodell implementiert, bei dem alle Motoreingriffe als Drehmomentanforderungen ausgedrückt sind. Zur Bedatung dieses Modells wird das Drehmoment des Motors 1 in Abhängigkeit vom Zündwinkel unter Variation von Parametern wie Drehzahl, Lambda-Wert, Füllung, ggf. einer Abgasrückführrate sowie weiterer Betriebsparameter festgelegt. Das Drehmomentmodell kann als Kennfeld in einem Datenspeicher des Motorsteuergeräts 30 abgelegt sein. In einer bevorzugten Ausführungsform der Erfindung beinhaltet das Datenmodell auch eine Bedatung der Abhängigkeit des Liefergrads vom Einspritzbeginn. Zusätzlich kann der Einfluss einer Variation der Einspritzdauer berücksichtigt werden.

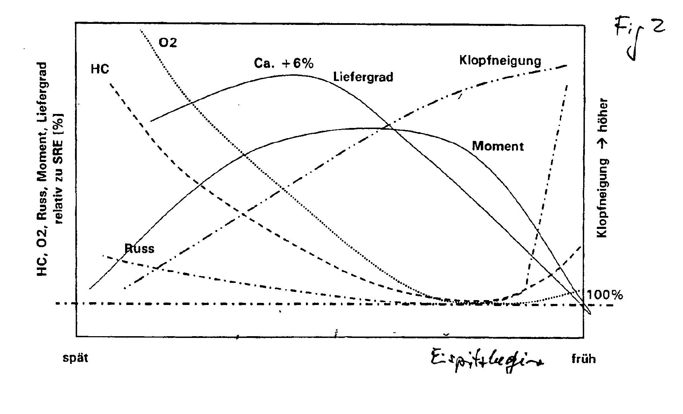

In Figur 2 ist die Abhängigkeit verschiedener motorischer Parameter vom Einspritzbeginn bei Drehzahlen < 3.000 1/min bei Volllast schematisch dargestellt. Hierbei zeigen die mit Ruß, HC, 02 bezeichneten Kurven die Emission für Ruß, Kohlenwasserstoffe (HC) und Restsauerstoff (02) an. Ferner ist die Abhängigkeit der Klopfneigung des Motors vom Einspritzbeginn dargestellt. Es ist ferner die Abhängigkeit des Drehmoments eines konventionellen direkteinspritzenden Motors relativ zu dem Wert eines Motors mit Saugrohreinspritzung gezeigt. Die mit Liefergrad bezeichnete Kurve zeigt den relativen Liefergradvorteil eines direkteinspritzenden Motors gegenüber einem Motor mit Saugrohreinspritzung in Abhängigkeit vom Einspritzbeginn. Ein für den Liefergradvorteil typischer Wert liegt bei circa 5 %. Die Emissionskurven für Ruß, HC und 02 zeigen ein Minimum bei einem relativ frühen Einspritzbeginn. Das Maximum des Liefergradvorteils λ_{I}^{max} liegt demgegenüber bei einem späteren Einspritzbeginn.

Die dargestellte Kurve für das Drehmoment zeigt ein Maximum in einem Bereich zwischen dem Maximum des Liefergradvorteils und dem Minimum der Emissionen. Darin drückt sich aus, dass sich Liefergrad- und Klopfneigungsvorteil mit einem Optimum des Verbrennungsvorganges kombinieren. Die erhöhten HC- und O2-Emissionen zeigen zusammen mit einer Tendenz zu einer Verschleppung der Verbrennung bei später Einspritzung die geringere Effektivität des Verbrennungsvorgangs bei einem späten Einspritzbeginn, auch wenn Liefergrad und Klopfneigung bei diesen Werten verbessert sind.

Erfindungsgemäß wird der Einspritzbeginn in einen Bereich um das Maximum λ_{I}^{max} des Liefergrads gelegt und gleichzeitig der Verbrennungsvorgang durch Erhöhung der Zerstäubungsgüte der Einspritzung bzw. des Injektors effektiver gestaltet.

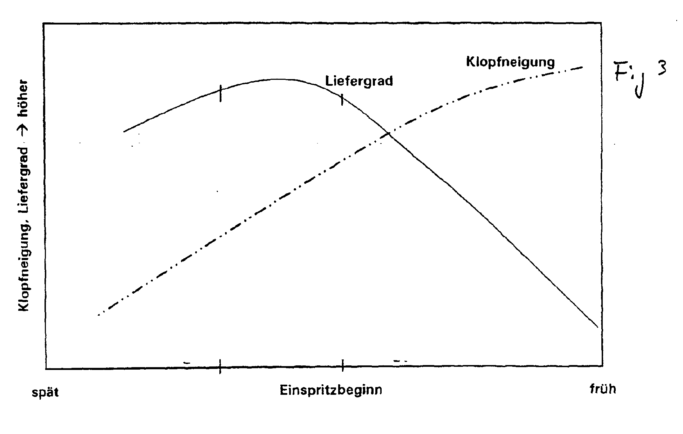

In Figur 3 ist in schematischer Darstellung die erfindungsgemäße Positionierung des Einspritzbeginns in einem Bereich um das Maximum des Liefergrads gezeigt. Erfindungsgemäß wird der Einspritzbeginn in einem Zielkorridor gewählt, in dem ein maximaler Liefergrad erreicht wird. Bevorzugt ist ein Einspritzbeginn in einem Bereich, in dem der Liefergrad mindestens 70 % seines Maximums λ_{I}^{Max} erreicht. Bevorzugte Werte für den Einspritzbeginn liegen in einem Intervall I zwischen 220° und 300°KW vor Zünd-OT. Eine besonders effektive innere Kühlung lässt sich erreichen, wenn dabei das Einlassventil in einem Bereich maximalen Hubs liegt. Bevorzugt sind hierbei Werte von < 30 % unterhalb des Maximalhubs des Einlassventils.

Erfindungsgemäß wird ein Injektor mit hoher Zerstäubungsgüte eingesetzt. Als Maß für die Zerstäubungsgüte wird die Tröpfchengröße in Sauter Mean Diameter (SMD) verwendet. Überraschenderweise hat sich gezeigt, dass die mit der erfindungsgemäß vorgeschlagenen Verlegung des Einspritzbeginns nach spät in den Bereich um ein Maximum des Liefergrads üblicherweise verbundene Verschlechterung des Verbrennungsprozesses durch die Wahl eines Injektors mit einer Zerstäubungsgüte von 12 µm SMD Tröpfchengröße oder besser beseitigt werden kann.

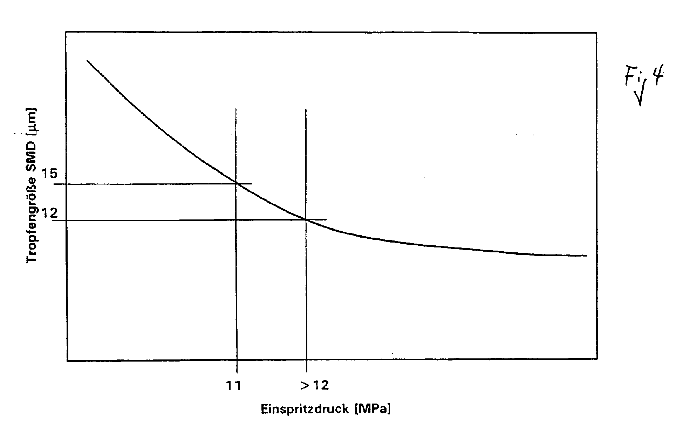

Für einen typischen Injektor besteht ein Zusammenhang zwischen Einspritzdruck und Tröpfchengröße, der es ermöglicht, über einen geeigneten Einspritzdruck eine erforderliche Zerstäubungsgüte, wie sie sich in der Tröpfchengröße ausdrückt, einzustellen. Ein Verlauf des Zusammenhangs zwischen Einspritzdruck und Tröpfchengröße für einen typischen Injektor ist in Fig. 4 dargestellt. Bevorzugt ist ein Einspritzdruck von > als 12 MPa. Um eine ausreichend lange Einspritzdauer zu gewährleisten, ist bevorzugt gleichzeitig der statische Durchfluss des Injektors auf max. 0,2 ccm/s pro KW Motorleistung zu beschränken. Besonders bevorzugt ist ein Durchfluss von weniger als 0,12 ccm/s pro kW Motorleistung. Mit derartig gewählten Einspritzparametern lässt sich ein ausreichender Austausch von Luft und Kraftstoff und damit der gewünschte Kühleffekt der Luft sicherstellen. Die Einspritzzeit liegt erfindungsgemäß zwischen 35°KW und 55°KW.

Das beschriebene erfindungsgemäße Verfahren kann in günstiger Weise zusammen sowohl mit einer Einfach- als auch mit einer Mehrfacheinspritzung eingesetzt werden. Bei der Mehrfacheinspritzung sind Doppel- und Dreifacheinspritzungen bevorzugt. Um eine genügend schnelle Folge von Einspritzereignissen zu ermöglichen, wird bevorzugt ein Piezoinjektor eingesetzt. Ein derartiger Injektor ist beispielsweise aus der DE 195 48 526 A1 bekannt.

Das erfindungsgemäße Verfahren ermöglicht es bei einem Luftverhältnis (Lambda-Wert) von > 0,9 Sauerstoffemission von weniger als 0,3 % und HC-Emissionen von weniger als 10 g/kWh zu erreichen. Dabei sind Rußemissionen mit einer Bosch-Schwärzungszahl SZ von weniger als 0,5 erzielbar.

### Bezugszeichenliste

- 1: Fremdgezündeter direkteinspritzender Verbrennungsmotor
- 10: Brennraum
- 11: Zylinder
- 12: Einrichtung zur Kraftstoffeinspritzung
- 14: Injektor
- 16: Einlassventil
- 18: Gaspedal
- 20: Abgasanlage
- 22: Vorkatalysator
- 24: Hauptkatalysator
- 30: Motorsteuergerät
- 32: Steuermodul
- 34: Sensoren

## Patentansprüche

1. Verfahren zum Betrieb eines direkteinspritzenden fremdgezündeten Verbrennungsmotors mit einer Einrichtung zur Kraftstoffeinspritzung mittels eines Injektors in den Brennraum zumindest eines mit einem Einlassventil versehenden Zylinders des Motors, wobei
- für einen gegebenen Betriebspunkt des Motors die Emissionskurven des Motors für Ruß, Kohlenwasserstoffe und Restsauerstoff ein Minimum bei einem relativ frühen Einspritzbeginn zeigen
- der relative Liefergradvorteil des Motors gegenüber einem Motor mit Saugrohreinspritzung in Abhängigkeit vom Einspritzbeginn ein Maximum λ_{I}^{max} zeigt, welches bei einem späteren Einspritzbeginn als das Minimum der Emissionskurven liegt.
- das Drehmoment des Verbrennungsmotors in Abhängigkeit vom Einspritzbeginn ein Maximum in einem Bereich zwischen dem Maximum des Liefergradvorteils und dem Minimum der Emissionen für Ruß, Kohlenwasserstoffe und Restsauerstoff zeigt
- für den gegebenen Betriebspunkt des Motors der Einspritzbeginn in einem Bereich positioniert wird, in dem der Liefergrad des Motors mindestens 70 % seines Maximalwertes λ_{I}^{max} aufweist, wobei der Injektor eine Zerstäubungsgüte von 12 µm SMD-Tröpfchengröße oder besser aufweist.

2. Verfahren nach Anspruch 1, **dadurch gekennzeichnet, dass** der Einspritzbeginn in einem Intervall I zwischen 220°KW bis 300°KW vor dem oberen Totpunkt (ZOT) positioniert ist.

3. Verfahren nach Anspruch 1 oder 2, **dadurch gekennzeichnet, dass** der Einspritzbeginn in einem Bereich von zumindest 80 % eines maximalen Einlassventilhubs positioniert ist.

4. Verfahren nach zumindest einem der vorhergehenden Ansprüche, **dadurch gekennzeichnet, dass** die Kraftstoffeinspritzung mit einer Einspritzzeit mit einer Dauer in einem Bereich von zumindest 35°KW und maximal 55°KW erfolgt.

5. Verfahren nach zumindest einem der vorhergehenden Ansprüche, **dadurch gekennzeichnet, dass** der Injektor bei Einspritzdrücken von zumindest 12 MPa, bevorzugt 15 MPa, eingesetzt wird.

6. Verfahren nach zumindest einem der vorhergehenden Ansprüche, **dadurch gekennzeichnet, dass** der injektor mit einem statischen Durchfluss von maximal 0,2 ccm/s pro KW Motorleistung, bevorzugt von maximal 0,12 ccm/s pro kW Motorleistung betrieben wird.

7. Verfahren nach zumindest einem der vorhergehenden Ansprüche, **dadurch gekennzeichnet, dass** zumindest einer der Parameter Einspritzbeginn, Einspritzzeit, Zerstäubungsgüte oder Einspritzdruck derart gewählt ist, dass bei einem Lambda-Wert von 0,9 oder mehr eine Sauerstoffemission von < 0,3 %, eine Kohlenwasserstoffemission von = 10 g/kWh und Rußemissionen von SZ = 0,5 erzielt werden.

8. Verfahren nach zumindest einem der vorhergehenden Ansprüche, **dadurch gekennzeichnet, dass** der Motor in einem Drehzahlbereich unterhalb von 3.000 1/min betrieben wird.

9. Verfahren nach zumindest einem der vorhergehenden Ansprüche, **dadurch gekennzeichnet, dass** der Motor gemäß einem Drehmomentmodell betrieben wird, in dem für die Bedienung von Drehmomentanforderungen in Abhängigkeit vom Zündwinkel Einflüsse von zumindest einem der Betriebsparameter Drehzahl, Füllung, Lambda-Wert, Abgasrückführrate. Klopfneigung, Abgasemission oder Katalysatorkennzahlen berücksichtigt werden.

10. Direkteinspritzender fremdgezündeter Verbrennungsmotor mit einer Einrichtung zur Kraftstoffeinspritzung in den Brennraum zumindest eines mit einem Einlassventil versehenden Zylinders des Motors, wobei
- für einen gegebenen Betriebspunkt des Motors die Emissionskurven des Motors für Ruß, Kohlenwasserstoffe und Restsauerstoff ein Minimum bei einem relativ frühen Einspritzbeginn zeigen
- der relative Liefergradvorteil des Motors gegenüber einem Motor mit Saugrohreinspritzung in Abhängigkeit vom Einspritzbeginn ein Maximum λ_{I}^{max} zeigt, welches bei einem späteren Einspritzbeginn als das Minimum der Emissionskurven liegt, und
- das Drehmoment des Verbrennungsmotors in Abhängigkeit vom Einspritzbeginn ein Maximum in einem Bereich zwischen dem Maximum des Liefergradvorteils und dem Minimum der Emissionen für Ruß, Kohlenwasserstoffe und Restsauerstoff zeigt
- ein Steuermodul zur Positionierung eines Einspritzbeginns in einem Bereich vorgesehen ist, in dem in dem gegebenen Betriebspunkt der Liefergrad des Motors mindestens 70 % seines Maximalwertes λIMax aufweist, wobei für die Kraftstoffeinspritzung ein Injektor vorgesehen ist, der eine Zerstäubungsgüte von 12 µm SMD-Tröpfchengröße oder besser aufweist.

11. Verbrennungsmotor nach Anspruch 10, **dadurch gekennzeichnet, dass** der Einspritzbeginn in einem Intervall I zwischen 220°KW bis 300°KW vor dem oberen Totpunkt (ZOT) positioniert ist.

12. Verbrennungsmotor nach zumindest einem der Ansprüche 10 oder 11, **dadurch gekennzeichnet, dass** der Einspritzbeginn in einem Bereich von zumindest 80 % eines maximalen Einlassventilhubs positioniert ist.

13. Verbrennungsmotor nach zumindest einem der Ansprüche 10 bis 12, **dadurch gekennzeichnet, dass** eine Einspritzzeit mit einer Dauer in einem Bereich von zumindest 35°KW und maximal 55°KW vorgesehen ist

14. Verbrennungsmotor nach zumindest einem der Ansprüche 10 bis 13, **dadurch gekennzeichnet, dass** der Injektor einen statischen Durchfluss von maximal 0,2 ccm/s pro KW Motorleistung, insbesondere einen statischen Durchfluss von maximal 0,12 ccm/s pro kW Motorleistung aufweist bei einem Einspritzdruck von zumindest 12 MPa.

15. Verbrennungsmotor nach zumindest einem der Ansprüche 10 bis 14, **dadurch gekennzeichnet, dass** der Motor einen Schichtladebetrieb erlaubt.

## Claims

1. Method for operating a direct-injection, applied-ignition internal combustion engine having a device for the injection of fuel by means of an injector into the combustion chamber of at least one cylinder, which is provided with an inlet valve, of the engine, wherein
- for a given operating point of the engine, the emissions curves of the engine for soot, hydrocarbons and residual oxygen exhibit a minimum at a relatively early start of injection,
- the relative volumetric efficiency advantage of the engine in relation to an engine with intake pipe injection as a function of the start of injection exhibits a maximum λ_{I}^{max} which lies at a later start of injection than the minimum of the emissions curves,
- the torque of the internal combustion engine as a function of the start of injection exhibits a maximum in a range between the maximum of the volumetric efficiency advantage and the minimum of the emissions for soot, hydrocarbons and residual oxygen,
- for the given operating point of the engine, the start of injection is positioned in a range in which the volumetric efficiency of the engine is at at least 70% of its maximum value λ_{I}^{Max}, wherein the injector has an atomization quality of 12 µm SMD droplet size or better.

2. Method according to Claim 1, **characterized in that** the start of injection is positioned in an interval I between 220°CA and 300°CA before top dead centre (ITDC).

3. Method according to Claim 1 or 2, **characterized in that** the start of injection is positioned in a range of at least 80% of a maximum inlet valve lift.

4. Method according to at least one of the preceding claims, **characterized in that** the fuel injection takes place with an injection time of a duration in a range from at least 35°CA to at a maximum 55°CA.

5. Method according to at least one of the preceding claims, **characterized in that** the injector is used with injection pressures of at least 12 MPa, preferably 15 MPa.

6. Method according to at least one of the preceding claims, **characterized in that** the injector is operated with a static flow of at a maximum 0.2 ccm/s per kW engine power, preferably of at a maximum 0.12 ccm/s per kW engine power.

7. Method according to at least one of the preceding claims, **characterized in that** at least one of the parameters start of injection, injection time, atomization quality or injection pressure is selected such that, at a lambda value of 0.9 or greater, an oxygen emission of < 0.3%, a hydrocarbon emission of = 10 g/kWh and soot emissions of SN = 0.5 are attained.

8. Method according to at least one of the preceding claims, **characterized in that** the engine is operated in a rotational speed range below 3000 rpm.

9. Method according to at least one of the preceding claims, **characterized in that** the engine is operated on the basis of a torque model in which, for the handling of torque demands, influences of at least one of the operating parameters rotational speed, charge, lambda value, exhaustgas recirculation rate, knocking tendency, exhaust gas emission or catalytic converter characteristic curves are taken into consideration as a function of the ignition angle.

10. Direct-injection, applied-ignition internal combustion engine having a device for the injection of fuel into the combustion chamber of at least one cylinder, which is provided with an inlet valve, of the engine, wherein
- for a given operating point of the engine, the emissions curves of the engine for soot, hydrocarbons and residual oxygen exhibit a minimum at a relatively early start of injection,
- the relative volumetric efficiency advantage of the engine in relation to an engine with intake pipe injection as a function of the start of injection exhibits a maximum λ_{I}^{Max} which lies at a later start of injection than the minimum of the emissions curves, and
- the torque of the internal combustion engine as a function of the start of injection exhibits a maximum in a range between the maximum of the volumetric efficiency advantage and the minimum of the emissions for soot, hydrocarbons and residual oxygen,
- a control module is provided for positioning a start of injection in a range in which, at the given operating point, the volumetric efficiency of the engine is at at least 70% of its maximum value λ_{I}^{Max}, wherein for the fuel injection, an injector is provided which has an atomization quality of 12 µm SMD droplet size or better.

11. Internal combustion engine according to Claim 10, **characterized in that** the start of injection is positioned in an interval I between 220°CA and 300°CA before top dead centre (ITDC).

12. Internal combustion engine according to at least one of Claims 10 and 11, **characterized in that** the start of injection is positioned in a range of at least 80% of a maximum inlet valve lift.

13. Internal combustion engine according to at least one of Claims 10 to 12, **characterized in that** an injection time of a duration in a range from at least 35°CA to at a maximum 55°CA is provided.

14. Internal combustion engine according to at least one of Claims 10 to 13, **characterized in that** the injector has a static flow of at a maximum 0.2 ccm/s per kW engine power, in particular a static flow of at a maximum 0.12 ccm/s per kW engine power, at an injection pressure of at least 12 MPa.

15. Internal combustion engine according to at least one of Claims 10 to 14, **characterized in that** the engine permits stratified charge operation.

## Revendications

1. Procédé pour faire fonctionner un moteur à combustion interne à injection directe à allumage par étincelle avec un système d'injection de carburant au moyen d'un injecteur dans la chambre de combustion d'au moins un cylindre du moteur pourvu d'une soupape d'admission, dans lequel :
- pour un point de fonctionnement donné du moteur, les courbes d'émission du moteur en termes de suie, d'hydrocarbures et d'oxygène résiduel indiquent un minimum à un début d'injection relativement tôt,
- l'avantage de taux de charge relatif du moteur par rapport à un moteur avec une injection dans le collecteur d'admission en fonction du début d'injection indique un maximum λ₁^{Max} qui se situe à un début d'injection plus tard que le minimum des courbes d'émission,
- le couple du moteur à combustion interne en fonction du début d'injection indique un maximum dans une région entre le maximum d'avantage de taux de charge et le minimum des émissions en termes de suie, hydrocarbures et oxygène résiduel,
- et au point de fonctionnement donné du moteur, le début d'injection est situé dans une région dans laquelle le taux de charge du moteur vaut au moins 70 % de sa valeur maximale λ₁^{Max}, l'injecteur présentant une qualité de pulvérisation de taille de particule DMS (Diamètre moyen Sauter) de 12 µm ou mieux.

2. Procédé selon la revendication 1, **caractérisé en ce que** le début d'injection est situé dans un intervalle I entre 220° d'angle de vilebrequin à 300° d'angle de vilebrequin avant le point mort haut (PMH).

3. Procédé selon la revendication 1 ou 2, **caractérisé en ce que** le début d'injection est situé dans une plage d'au moins 80 % d'une course de soupape d'admission maximale.

4. Procédé selon au moins l'une quelconque des revendications précédentes, **caractérisé en ce que** l'injection de carburant a lieu avec un temps d'injection d'une durée de l'ordre d'au moins 35° d'angle de vilebrequin à 55° d'angle de vilebrequin au maximum.

5. Procédé selon au moins l'une quelconque des revendications précédentes, **caractérisé en ce que** l'injecteur est utilisé à des pressions d'injection d'au moins 12 MPa, de préférence de 15 MPa.

6. Procédé selon au moins l'une quelconque des revendications précédentes, **caractérisé en ce que** l'injecteur est employé avec un débit statique de 0,2 cm³/s au maximum par kW de puissance du moteur, de préférence de 0,12 cm³/s au maximum par kW de puissance du moteur.

7. Procédé selon au moins l'une quelconque des revendications précédentes, **caractérisé en ce qu'**au moins l'un des paramètres début d'injection, temps d'injection, qualité de la pulvérisation, ou pression d'injection est choisi de telle sorte que pour une valeur lambda de 0,9 ou plus, on obtienne une émission d'oxygène de < 0,3 %, une émission d'hydrocarbures de = 10 g/kWh et des émissions de suie avec un indice de noircissement SZ = 0,5.

8. Procédé selon au moins l'une quelconque des revendications précédentes, **caractérisé en ce que** le moteur fonctionne dans une plage de régimes en dessous de 3000 t/min.

9. Procédé selon au moins l'une quelconque des revendications précédentes, **caractérisé en ce que** le moteur fonctionne suivant un modèle de couple, dans lequel, pour la commande d'exigences de couple en fonction de l'angle d'allumage, on tient compte d'influences d'au moins l'un des paramètres de fonctionnement suivants : régime, remplissage, valeur lambda, taux de recirculation des gaz d'échappement, tendance à la détonation, émissions de gaz d'échappement ou données catalyseur.

10. Moteur à combustion interne à injection directe à allumage par étincelle avec un système d'injection de carburant dans la chambre de combustion d'au moins un cylindre du moteur pourvu d'une soupape d'admission, dans lequel
- pour un point de fonctionnement donné du moteur, les courbes d'émission du moteur en termes de suie, d'hydrocarbures et d'oxygène résiduel indiquent un minimum à un début d'injection relativement tôt,
- l'avantage de taux de charge relatif du moteur par rapport à un moteur avec une injection dans le collecteur d'admission en fonction du début d'injection indique un maximum λ₁^{Max} qui se situe à un début d'injection plus tard que le minimum des courbes d'émission,
- le couple du moteur à combustion interne en fonction du début d'injection indique un maximum dans une région entre le maximum d'avantage de taux de charge et le minimum des émissions en termes de suie, hydrocarbures et oxygène résiduel,
- et un module de commande est prévu pour le positionnement du début d'injection dans une plage dans laquelle, au point de fonctionnement donné, le taux de charge du moteur vaut au moins 70 % de sa valeur maximale λ₁^{Max}, un injecteur étant prévu pour l'injection de carburant, lequel présente une qualité de pulvérisation de taille de particule DMS (Diamètre moyen Sauter) de 12 µm ou mieux.

11. Moteur à combustion interne selon la revendication 10, **caractérisé en ce que** le début d'injection est situé dans un intervalle I entre 220° d'angle de vilebrequin et 300° d'angle de vilebrequin avant le point mort haut (PMH).

12. Moteur à combustion interne selon au moins l'une quelconque des revendications 10 ou 11, **caractérisé en ce que** le début d'injection est situé dans une plage d'au moins 80 % d'une course de soupape d'admission maximale.

13. Moteur à combustion interne selon au moins l'une quelconque des revendications 10 à 12, **caractérisé en ce que** l'injection de carburant a lieu avec un temps d'injection d'une durée de l'ordre d'au moins 35° d'angle de vilebrequin à 55° d'angle de vilebrequin au maximum.

14. Moteur à combustion interne selon au moins l'une quelconque des revendications 10 à 13, **caractérisé en ce que** l'injecteur est employé avec un débit statique de 0,2 cm³/s au maximum par kW de puissance du moteur, de préférence de 0,12 cm³/s au maximum par kW de puissance du moteur.

15. Moteur à combustion interne selon au moins l'une quelconque des revendications 10 à 14, **caractérisé en ce que** le moteur permet un fonctionnement à charge stratifiée.
